(19) Europäisches Patentamt

European Patent Office

Office européen des brevets

(11) EP 0 588 149 B1

(12) EUROPÄISCHE PATENTSCHRIFT

(45) Veröffentlichungstag und Bekanntmachung des Hinweises auf die Patenterteilung:
14.01.1998 Patentblatt 1998/03

(51) Int. Cl.$^6$: B01D 61/44, C25B 1/22

(21) Anmeldenummer: 93113949.7

(22) Anmeldetag: 01.09.1993

(54) **Verfahren zur elektrochemischen Spaltung von Alkalisulfaten und Ammoniumsulfat in die freien Laugen und Schwefelsäure bei gleichzeitiger anodischer Oxidation von Schwefeldioxid**

Process for the electrochemical dissociation of alkali sulfates and ammonium sulfate in free alkali and sulfuric acid with simultaneous anodic oxidation of sulfur dioxide

Procédé pour la dissociation de sulfates alcalins et de sulfate d'ammonium en base libre et acide sulfurique avec oxydation anodique simultanée du dioxyde de soufre

(84) Benannte Vertragsstaaten:
AT BE CH DE ES FR GB IT LI NL SE

(30) Priorität: 11.09.1992 DE 4230399

(43) Veröffentlichungstag der Anmeldung:
23.03.1994 Patentblatt 1994/12

(73) Patentinhaber:
TECHNOLOGY INNOVATION ASSOCIATES
Slough, Berks SL1 1NN (GB)

(72) Erfinder:
• Habermann, Wolfgang, Dr.
D-6500 Mainz 1 (DE)
• Kröner, Rudi, Dr.
D-6800 Mannheim 1 (DE)
• Meyer, Joachim, Dr.
D-6701 Maxdorf (DE)
• Fritzmann, Johann, Dr.
D-6900 Heidelberg (DE)
• Wolf, Hans-Josef, Dr.
D-6701 Maxdorf (DE)

(56) Entgegenhaltungen:
EP-A- 0 449 071        GB-A- 2 063 921
US-A- 4 561 945

• CHEMICAL ABSTRACTS, vol. 90, no. 24, 11. Juni 1979, Columbus, Ohio, US; abstract no. 194725, Seite 530 ;Spalte 1 ; & SU-A-652 238 (V. A. SMIRNOV ET AL.) 15. März 1979
• EXTENDED ABSTRACTS Bd. 81, Nr. 2 , Oktober 1981 Seiten 1392 - 1394 P. W. T. LU 'OPTIMIZATION OF SULFUR DIOXIDE DEPOLARIZED ELECTROLYZERS'
• CHEMICAL ABSTRACTS, vol. 69, no. 20, 11. November 1968, Columbus, Ohio, US; abstract no. 82882, Seite 7747 ;Spalte 2 ; & KHIM. PROM. UKR. Nr. 4 , 1968 Seiten 3 - 5 A. K. GORBACHEV ET AL. 'ELECTROCHEMICAL PREPARATION OF SODIUM HYDROXIDE AND SULFURIC ACID BY USING OXYGEN DEPOLARIZATION ON POROUS CATHODES'

**Beschreibung**

Die vorliegende Erfindung betrifft ein Verfahren zur elektrochemischen Spaltung von Alkalisulfaten in Alkalilaugen und Schwefelsäure in einer dreigeteilten Elektrodialysezelle mit einer durch Schwefeldioxid depolarisierten Anode.

Bei der Elektrolyse von Natriumsulfat nach dem Amalgamverfahren erhält man eine 20 gew.-%ige Schwefelsäure mit ~ 15 Gew.-% Natriumhydrogensulfat und Natriumamalgam. Das gebildete Natriumamalgam wird in separaten Zersetzern zu Natronlauge umgesetzt, während die salzhaltige Schwefelsäure in aufwendigen Verfahrensschritten aufgearbeitet werden muß. Der erforderliche Energieverbrauch liegt mit 3900 bis 4200 KWh/t NaOH (1 kWh = 3,6 x $10^6$ J) sehr hoch. Die relativ hohen Energiekosten und insbesondere die Quecksilberproblematik behindern heute eine technische Ausübung dieses Verfahrens.

Neuere Entwicklungen unter Verwendung von Kationen- und Anionenaustauschermembranen führten zu einfach oder mehrfach geteilten Elektrolyse- bzw. Elektrodialysezellen.

In einer durch eine Kationenaustauschermembran zweigeteilten Elektrolysezelle, in der die Sulfatlösung dem Anodenraum zugeführt wird, erhält man eine ~ 10 %ige salzhaltige Schwefelsäure und 15 bis 25 %ige Natronlauge bei Stromausbeuten von 65 bis 70 %. Der Energieverbrauch liegt bei > 4000 KWh/t NaOH. Ein technischer Einsatz dieses Prozesses scheitert an der unwirtschaftlichen Aufarbeitung der verdünnten, salzhaltigen Schwefelsäure und den geringen Stromausbeuten.

Eine weitere Verfahrenskonzeption ist die Elektrodialyse in einer durch eine Kationen- und Anionenaustauschermembran dreigeteilten Zelle. Bei diesem Verfahren durchströmt die Alkalisulfatlösung die Mittelkammer der Elektrodialysezelle. Im Kathodenraum werden bei einer Betriebstemperatur von + 50°C und Stromdichten von 0,8 bis 1 kA/m$^2$ etwa 15 bis 20 %ige Alkalilaugen sowie im Anodenraum 5 bis 15 %ige Schwefelsäuren bei Stromausbeuten von 60 bis 80 % erhalten. Der Energieverbrauch beträgt etwa 4000 kWh/t NaOH. Einer technischen Anwendung steht neben dem hohen Energieverbrauch die unzureichende Selektivität und Standzeit der bisher auf dem Markt befindlichen Anionenaustauschermembranen entgegen.

Neben dieser Verfahrenskonzeption wurde die Elektrodialyse mit bipolaren Membranen entwickelt. Bei der bipolaren Membran ist eine Kationen- mit einer Anionenaustauschermembran fest verbunden. Siehe hierzu Chem.-Ing.-Techn. 61 (1989) Nr. 12, Seite 935. Die bipolare Membran wird auf der Anionenaustauscherseite durch eine Kationenaustauschermembran und auf der kationenaustauschenden Membranseite durch eine Anionenaustauschermembran von dem alkalisulfathaltigen Elektrolyten separiert. Bei der Elektrodialyse wandern Alkalikationen durch die Kationenaustauschermembran in die Kammer, die von der Anionenaustauscherseite der bipolaren Membran begrenzt wird, während die Sulfationen durch die Anionenaustauschermembran in die Kammer vor die Kationenaustauscherseite der bipolaren Membran wandern. Gleichzeitig kommt es zur Dissoziation von Wasser im elektrischen Feld an der Phasengrenze Anionen-Kationenaustauschermembran, wodurch auf der Anionenaustauscherseite der bipolaren Membran Natronlauge und auf der Kationenaustauscherseite Schwefelsäure anfällt. Die Elektrodialyse mit bipolaren Membranen wird bei einer Temperatur von ≤ + 45°C und Stromdichten von ≤ 0,5 kA/m$^2$ durchgeführt. Nach Literaturangaben liegt der Energieverbrauch bei ~ 1700 kWh/t NaOH. Unbefriedigend bei dieser Verfahrenstechnik ist, daß die bipolaren Membranen nicht ausreichend selektiv und stabil sind, wodurch nur verdünnte salzhaltige Schwefelsäuren von 5 bis 10 Gew.-% und salzhaltige Alkalilaugen von 8 bis 10 Gew.-% anfallen. Hinzu kommt als wesentlicher Nachteil, daß die ladungstragenden, quaternären Ammoniumgruppen der Anionenaustauscherseite der bipolaren Membranen in der Alkalilauge abgebaut werden. Für eine technische Aufarbeitung von Alkalisulfaten zu höher konzentrierten Alkalilaugen und Schwefelsäure scheidet dieses Verfahren daher aus.

Weiterhin ist ein Verfahren mit einer durch eine Anionen- und eine Kationenaustauschermembran dreigeteilten Elektrolysezelle bekannt geworden bei dem die Anode durch den an der Kathode entwickelten Wasserstoff depolarisiert wird. Nachteilig bei dieser Verfahrenstechnik ist, daß durch die Wasserstoffreduktion an der Anode kein Wasser im Anodenraum verbraucht wird, wodurch nur verdünnte Schwefelsäure ≤ 15 Gew.-% erhalten werden. Der Vorteil der Verfahrenstechnik besteht darin, daß die Energiekosten für die Elektrolyse gegenüber einer Dreikammerzelle mit nicht depolarisierter Anode um ca. 1/3 gesenkt werden können.

Schließlich ist ein Verfahren zu elektrochemischen Spaltung von Alkalisulfaten in höher konzentrierte Alkalilaugen und Schwefelsäuren durch Einsatz einer dreigeteilten Elektrodialysezelle bei Temperaturen von ≥ 20 bis ≤ 110°C und Stromdichten von 0,05 bis 15 kA/m$^2$ mit einer Anionenaustauschermembran, deren polymere Ionenaustauschermatrix aus einem Styrol-Divinylbenzol-Copolymerisat mit sehr stark basischen quaternären Ammoniumgruppen und einem Hydroniumionenblocker besteht, auf deren Seite zur Mittelkammer sich eine Anionenaustauscherschicht oder Anionenaustauschermembran mit tertiären oder sekundären Aminogruppen befindet, bekannt geworden (siehe EP-A-0 449 071). Der Nachteil dieser Verfahrenstechnik besteht darin, daß durch die anodische Sauerstoffentwicklung relativ hohe Energiekosten anfallen.

Die Aufgabe der vorliegenden Erfindung ist es, die elektrochemische Spaltung von Alkalisulfaten und Ammoniumsulfat zu freien Laugen und Schwefelsäure in einer durch Ionenaustauschermembranen dreigeteilten Elektrolysezelle so durchzuführen, daß man salzfreie Alkalilaugen und Schwefelsäuren in technisch verwertbaren Konzentrationen bei hohen Stromausbeuten und einem möglichst geringen Energieverbrauch erhält.

Die Aufgabe wurde erfindungsgemäß dadurch gelöst, daß man eine durch eine Anionen- und eine Kationenaustauschermembran dreigeteilte Elektrodialysezelle verwendet, deren Anode mit Schwefeldioxid depolarisiert wird.

Bei der elektrochemischen Spaltung nach dem erfindungsgemäßen Verfahren werden z.B. die Alkalisulfate mit dem Schwefeldioxid wie folgt umgesetzt:

$$M_2SO_4 + 4\ H_2O + SO_2 \xrightarrow{2\ e} 2\ MOH + 2\ H_2SO_4 + H_2 \tag{1}$$

Gegenüber einer Alkalisulfatspaltung unter Sauerstoffentwicklung im Anodenraum wird nach Gleichung (1) die doppelte Menge Schwefelsäure gebildet und damit die Konzentration der Schwefelsäure erhöht. Gleichzeitig wird ein Wassermolekül mehr umgesetzt, wie der Vergleich mit der elektrochemischen Spaltung unter Sauerstoffentwicklung zeigt. Siehe hierzu die Gleichung (2).

$$M_2SO_4 + 3\ H_2O \xrightarrow{2\ e} 2\ MOH + H_2SO_4 + H_2 + 1/2O_2 \tag{2}$$

Denselben Vorteil hat das erfindungsgemäße Verfahren gegenüber einer Elektrolyse bei der die Anode durch Wasserstoff depolarisiert wird.

Die günstigste Verfahrenstechnik ist die Depolarisation der Anode mit Schwefeldioxid gemäß der Gleichung

$$SO_2 + 2\ H_2O \rightarrow HSO_4^- + 3\ H^+ + 2e\ E° = 0,12\ V, \tag{3}$$

da hier bei niedrigen Anodenpotentialen hohe Schwefelsäurekonzentrationen erreichbar sind.

Bei der Depolarisation der Anode hat es sich als vorteilhaft erwiesen, dem Schwefeldioxid geringe Mengen Wasserstoff zuzusetzen. Der Wasserstoffanteil kann 0,5 bis 5 Vol.-% betragen und sollte 10 Vol.-% nicht übersteigen, damit der Wasserhaushalt und die Schwefelsäurekonzentrationen nicht beeinflußt werden. An Stelle von Wasserstoff kann dem Schwefeldioxid auch Kohlenmonoxid und/oder Schwefelwasserstoff im gleichen Volumenverhältnis zugesetzt werden. Bei der Verwendung von Schwefelwasserstoff ist darauf zu achten, daß die Anodenpotentiale 0,46 V bezogen auf die Wasserstoffnormalelektrode nicht unterschreiten, um die Entstehung von Schwefel im Anodenraum zu vermeiden. Werden z.B. Spaltgase verwendet, die Kohlenmonoxid enthalten, dürfen keine Elektrodenmaterialien eingesetzt werden, die Carbonyle bilden.

Als Anodenmaterialien kommen dotierte Graphite oder Metalle oder Metall-Legierungen in Betracht, die eine elektrolytbeständige, elektronenleitende Deckschicht aufweisen.

Geeignete Anodenmaterialien für die depolarisierten Anoden in schwefelsäurehaltigen Anolyten sind z.B. oberflächlich dotierte Metalle oder Metall-Legierungen der IV. bis VI. Nebengruppe, deren Fladepotential so negativ ist, daß sie bereits unter Wasserstoffentwicklung in wäßrigen Elektrolyten passiviert werden. Bevorzugt eignen sich Metalle- oder Metall-Legierungen, die elektrisch leitende Zwischenschichten aus Boriden und/oder Carbiden und/oder Siliciden der IV. bis VI. Nebengruppe oder gegebenenfalls mit Platinmetallen dotiertem Tantal und/oder Niob aufweisen, deren Oberfläche mit elektrisch leitenden, nicht stöchiometrischen Mischoxiden aus Ventilmetallen der IV. bis VI. Nebengruppe des periodischen Systems der Elemente und Metallen oder Metalloxiden der Platingruppe oder Platinmetallverbindungen wie z.B. Platinaten dotiert sind. Vorzugsweise kommen Mischoxide des Tantal-Iridiums, Tantal-Platins, Tantal-Palladiums und Tantal-Rhodiums sowie Platinate vom Typ $Li_{0,3} \cdot Pt_3O_4$ in Betracht.

Neben diesen Beschichtungen können auch Mischoxide auf Basis von Titan und/oder Tantal und/oder Niob und/oder Wolfram mit Metallen und/oder Metalloxiden der Platingruppe direkt auf der Metall- oder Metall-Legierungsoberfläche eingesetzt werden. Weiterhin kommen, insbesondere bei Verwendung von Schwefeldioxid/Schwefelwasserstoff- oder Schwefeldioxid/Wasserstoffgemischen Legierungen bestehend aus Metallen der IV. bis VI. Nebengruppe mit Kupfer und/oder Silber und/oder Gold in Betracht, wobei diese Legierungen bis zu 5 Gew.-% Palladium und/oder Eisen und/oder Nickel und/oder Kobalt enthalten. Bei Abwesenheit von Palladium sind diese Metalle- bzw. Metall-Legierungen oberflächlich mit Platinmetallen und/oder Platinmetallmischoxiden dotiert. Der Kupfer- und/oder Silber- und/oder Goldanteil in diesen Legierungen kann bis zu 80 Gew.-%, vorzugsweise 15 bis 50 Gew.-% betragen.

Neben dotierten Metallen oder Metall-Legierungen kann als Anodenmaterial mit Platinmetallen und/oder Platinmetall-Mischoxiden mit Metallen der IV. bis VI. Nebengruppe und/oder Silber und/oder Gold dotierter Graphit verwendet werden.

Das Arbeitspotential der Anoden sollte oberhalb des Fladepotentials des Trägermaterials liegen und im allgemeinen ≤ +1000 mV, vorzugsweise zwischen 120 und 500 mV gegen die Wasserstoffnormalelektrode betragen, so daß ein möglichst geringer Energieverbrauch bei der elektrochemischen Spaltung erforderlich ist.

Als Kathodenmaterialien kommen mit Platinmetallen und/oder Platinmetallmischoxiden und/oder Silber und/oder Gold dotierter Graphit oder mit diesen Metallen dotiertes Nickel oder dotiertes Titan oder metallisches Silber oder Gold in Betracht. Neben diesen Kathoden können z.B. auch mit Eisen-III-phthalocyaninen, unterstöchiometrischen Mischoxiden aus Titan und Eisen dotierte Trägermaterialien aus Titan, Nickel und Graphit verwendet werden. Weiterhin sind in wäßriger halbkonzentrierter Salpetersäure anodisch anoxidierte Graphite geeignet, die gegebenenfalls mit unterstöchiometrischen Mischoxiden aus Titan, Platinmetallen, Platinmetalloxiden, Silber oder Gold dotiert sind.

Das Arbeitspotential der Kathoden sollte $\leq$ -800 mV, vorzugsweise zwischen +100 und +350 mV gegen die Wasserstoffnormalelektrode liegen.

Die Anoden- und Kathodenmaterialien können zur Vergrößerung der Oberfläche in Form von Wolle, Schwamm, Granulaten und feinmaschen Netzen, die z.B. in mehreren Lagen übereinander gelegt werden, zum Einsatz kommen. Zusätzlich können die Elektrodenmaterialien zur Vergrößerung der Oberfläche oberflächlich aufgerauht oder makroporös sein. Die Anoden und Kathoden kann man in Form von Zweiphasen- oder Dreiphasenelektroden verwenden. Beim Einsatz von Zweiphasenelektroden wird das zur Depolarisation verwendete Oxidations- oder Reduktionsmittel im Elektrolyten gelöst, der Elektrode zugeführt oder die Elektrode von diesem durchströmt, wobei die Strömungsgeschwindigkeit $\geq$ 15 cm/s, vorzugsweise 30 bis 100 cm/s betragen sollte. Bei der Verwendung von Dreiphasenelektroden wird das Oxidations- oder Reduktionsmittel, das zur Depolarisation eingesetzt wird, der Elektrode in gasförmiger Form oder als Gas-/Flüssigkeitsgemisch zugeführt. Zur Verbesserung der Löslichkeit und Verminderung des Energiebedarfs kann hier bei Drücken von 1 bis 10 bar gearbeitet werden.

Zur elektrochemischen Spaltung wird eine Anionenaustauschermembran in der Elektrodialysezelle verwendet, deren polymere Ionenaustauschermatrix aus einem Styrol-Divinylbenzol-Copolymerisat mit stark basischen, quervernetzten, quaternären Ammoniumgruppen von Typ $R\text{-}CH_2\text{-}N(R_3)_3^+$ und einem Hydroniumionenblocker besteht.

Als polymere Ionenaustauschermatrix wird ein Styrol-Divinylbenzol-Copolymerisat mit einem Anteil von 4 bis 16, vorzugsweise 6 bis 8 Massen-% Divinylbenzol verwendet. Die Polystyrolhauptkette kann zusätzlich vernetzt sein, z.B. über Polymethylen- oder Polyethylengruppen.

In der polymeren Matrix werden bevorzugt stark basische, quervernetzte, quaternäre Ammoniumgruppen vom Typ $R\text{-}CH_2\text{-}N(CH_3)_3^+$ verwendet.

Die Totalkapazität sollte in der polymeren Ionenaustauschermatrix mit den stark basischen, quervernetzten, quaternären Ammoniumgruppen 1,4 bis 1,6 mval/ml feuchter Ionenaustauschermembran betragen.

Die teilweise Blockierung der Permeation von Hydroniumionen wird durch den Anteil und die spezielle Vernetzung des Divinylbenzols erreicht. Die Divinylbenzolanteile sollten vollständig vernetzt sein, wobei durch Quervernetzung ein Vernetzungsgrad anzustreben ist, der dem doppelten prozentualen Anteil an Divinylbenzol entspricht.

Als Hydroniumionenblocker können außerdem in der Ionenaustauschermatrix mit den stark basischen quaternären Ammoniumgruppen niedermolekulare tertiäre oder sekundäre Amine verankert werden.

Zur Verbesserung der Selektivität können in die Oberfläche der Anionenaustauscherschicht oder Membran mit den stark basischen ladungstragenden quaternären Ammoniumgruppen zusätzlich stark basische quaternäre Ammoniumgruppen in hoher Konzentration eingebracht werden. Diese ladungstragenden Gruppen werden z.B. mit Chlormethylether in Gegenwart von Aluminiumchlorid sowie anschließender Umsetzung mit Trimethylamin erzeugt, wodurch eine weitere Vernetzung der polymeren Matrixoberfläche über die Methylenbrücken erfolgt und eine isopore Struktur der Ionenaustauscheroberfläche erreicht wird.

Als Stützgewebe für die polymere Ionenaustauschermatrix wird Polypropylen oder Polyethylen verwendet, wobei die Anbindung des Stützgewebes an die polymere Matrix mit Hilfe eines vernetzten Polyethylens erfolgt, so daß eine hohe Temperaturbeständigkeit und Selektivität erreicht wird.

Als besonders günstig hat sich ein Verfahren zur Herstellung der Anionenaustauschermembran erwiesen, bei dem man die Paste, die in einem Gemisch, das als wesentliche Komponenten Monomere mit funktionellen Gruppen, die zum Einführen von Ionenaustauschgruppen geeignet sind, Vernetzer und Polymerisationsinitiatoren mit Polyethylen-Feinpulver enthält, auf ein tuchartiges Substrat aus Polyethylen oder Polypropylen aufbringt und polymerisiert, um dann die Ionenaustauschgruppen einzuführen.

Wichtig bei dieser Fertigung ist, daß man die Paste dadurch herstellt, daß man dem Gemisch, das als hauptsächliche Komponenten Monomere mit funktionellen Gruppen, die zum Einführen der Ionenaustauschgruppen geeignet sind, neben Vernetzern und Polymerisationsinitiatoren ein kugelartiges Polyethylen-Feinpulver mit einem Korndurchmesser von weniger als 10 $\mu$m zusetzt. Nach der vorliegenden Erfindung ist nämlich durch die Verwendung von kugelartigem Polyethylen-Feinpulver mit einem Korndurchmesser von weniger als 10 $\mu$m ein Gemisch mit gewöhnlich 25 bis 80 Gew.-% möglich, bezogen auf ein bestimmtes Monomerengemisch. Das Gemisch kann man dann als viskose und fadenziehende Paste erhalten, die man auf ein als Verstärkungsmaterial dienendes tuchartiges Substrat aus Polyethylen gleichmäßig aufträgt.

Eine Paste mit Monomeren, die viel von solchem Polyethylen-Feinpulver enthält, wird gleichmäßig auf ein tuchartiges Substrat aus Polyethylen oder Polypropylen aufgetragen und polymerisiert. Dadurch bildet sich eine Zusammensetzung, die einer "Meer-Insel-Struktur" entspricht mit dem Polyethylen-Feinpulver als Meer und den entstandenen Ionenaustauscherteilen als Inseln. Teile mit der Meer-Insel-Struktur, die sich durch viel Polyethylen-Feinpulver gebildet haben, zeigen eine gute Haftung, weil sie mit dem Substrat aus Polyethylen oder Polypropylen leicht thermisch verschmelzen.

Bevorzugt fertigt man solche Anionenaustauschermembranen wie folgt:

Zu 70 Gew.-Teilen Chlormethylstyrol, 15 Gew.-Teilen Divinylbenzol, 2 Gew.-Teilen Benzylperoxid und 2 Gew.-Teilen NBR-Kautschuk gab man 70 Gew.-Teilen Polyethylen-Feinpulver niederer Dichte (Flow Beads LE-108, Warenzeichen) mit einem Schmelzpunkt von 110°C und Kugelform mit einem mittleren Korndurchmesser von 7 μm. Die dabei entstehende Paste streicht man auf ein als Verstärkungsmaterial dienendes Gewebe mit 100 Maschen/cm$^2$ aus Polyethylen hoher Dichte, beschichtet das Ganze mit einer Tetoron-Folie (aus Polyester der Firma Teijin) als Abziehmaterial und polymerisiert 8 Stunden bei 105°C.

Das anfallende membranartige makromolekulare Polymer aminiert man in einer wäßrigen Lösung mit 10 Gew.-% Trimethylamin und 20 Gew.-% Aceton und erhält so eine besonders geeignete Anionenaustauschermembran mit einem elektrischen Widerstand von 6,2 Ω/cm$^2$.

Zum Schutz der Anionenaustauschermembran gegenüber Verschmutzungen und zur weiteren Verbesserung der Selektivität kann auf der Anionenaustauscherseite, die sich in der Mittelkammer befindet, eine weitere Anionenaustauscherschicht oder Membran mit tertiären oder sekundären Aminogruppen aufgebracht werden. In dieser Membran werden bevorzugt als tertiäre oder sekundäre Aminogruppen R-CH$_2$-N(CH$_3$)$_2$- oder R-NH(CH$_2$CH$_2$NH)$_n$-Gruppen verwendet.

Die elektrochemische Spaltung des Alkali- und Ammoniumsulfates erfolgt bei Temperaturen von ≥ +20°C und ≤ +120°C, vorzugsweise bei Temperaturen von +70°C bis +110°C. Die Stromdichten sollten, um hohe Schwefelsäure- und Natronlaugekonzentration bei hohen Stromausbeuten zu erreichen, mehr als 1,5 kA/m$^2$ betragen. Für die Umsetzung kommen Stromdichten von 0,01 bis 15 kA/m$^2$, vorzugsweise von 3 bis 10 kA/m$^2$ in Betracht. Bei geringen Stromdichten von ≤ 1 kA/m$^2$ sinkt die Zellspannung durch den kleineren Spannungsverlust unter 1,3 V, so daß die Spaltung der Alkali- und Ammoniumsulfate energetisch sehr günstig durchgeführt werden kann.

Hierbei werden allerdings geringere Säure- und Laugekonzentrationen erhalten.

Als Kationenaustauschermembranen werden bevorzugt Polymere auf Basis von perfluorierten Olefinen oder Copolymere aus Tetrafluorethylen mit ungesättigten perfluorierten Ethern oder Copolymere aus Styrol und Divinylbenzol verwendet, die als ladungstragende Gruppen Sulfonsäure- und Carboxylgruppen oder nur Sulfonsäuregruppen enthalten, da sie wesentlich beständiger gegenüber Einlagerungen und Verschmutzungen durch mehrwertige Kationen sind.

Zur Verminderung des Spannungsverlustes in der Mittelkammer der Elektrodialysezelle sollte der Abstand zwischen der Kationen- und Anionenaustauschermembran nicht mehr als 3 mm betragen. Als vorteilhaft hat sich ein Abstand von 0,5 bis 2 mm zwischen den Membranen erwiesen.

In der Mittelkammer können die Alkali- und Ammoniumsulfatkonzentrationen zwischen 0,5 Gew.-% und der Sättigungsgrenze liegen. Bevorzugt sind Alkalisulfatgehalte von 10 Gew.-% bis zur Sättigungsgrenze. Als Alkalisulfate kommen vorzugsweise die Sulfate des Natriums oder Kaliums in Betracht.

Zur Verbesserung der Selektivität und der Membranstandzeiten können der Sulfatlösung 0,001 bis 2 Gew.-% Ammoniak oder primäre, sekundäre oder tertiäre Amine, z.B. mit Alkylresten mit 1 bis 4 Kohlenstoffatomen am Stickstoffatom, die auch eine Hydroxylgruppe oder Alkoxygruppe als Substituenten haben können, zugesetzt werden. Geeignete Amine sind beispielsweise Trimethylamin oder Triethylamin. Geeignet sind ferner cyclische Amine, wie Aminoethylmorpholin, Aminoethylpyrrolidin oder Cyclohexylamin sowie Polyamine, die durch Umsetzung von Aminen mit Ethylenimin erhältlich sind.

Vorzugsweise setzt man leichtflüchtige Amine oder solche Amine ein, die aufgrund ihrer Molekülgröße nicht durch Kationenaustauschermembran wandern können, so daß ohne großen verfahrenstechnischen Aufwand reine Alkalilaugen erhalten werden. Leichtflüchtige Amine können in einfacher Weise z.B. durch Strippen aus der abgereicherten Sulfatlösung entfernt werden, wodurch weitere Abwasserprobleme umgangen werden.

Der pH-Wert in der sulfathaltigen Mittelkammer sollte während der elektrochemischen Spaltung im Bereich von pH ≥ 3 und pH ≤ 12 vorzugsweise zwischen pH 5 und pH 10 liegen.

Die Elektrodialysezellen können kontinuierlich oder im Batchbetrieb zur Umsetzung der Alkalisulfate oder des Ammoniumsulfates betrieben werden. Als günstig hat sich ein kontinuierlicher Kaskadenbetrieb in Gegenstrom- oder Gleichstromfahrweise erwiesen.

Für die elektrochemische Spaltung verwendet man zweckmäßig mehrere elektrisch in Reihe geschaltete Elektrodialysezellen. Bevorzugt werden hierbei die Produktströme der jeweiligen Kammern parallel geschaltet, d.h. je nach Kammertyp gemeinsam aufgefangen. Mehrere Elektrodialysezellen können so zu Blöcken zusammengefaßt werden. Im allgemeinen liegt die Zahl von Elektrodialysezellen pro Block im Bereich von 1 bis 100, bevorzugt zwischen 20 und 70.

Besonders bevorzugt kann man bei der Verfahrensweise mit mehreren Blöcken die Eintritts- und Austrittsströme der jeweiligen Blöcke so koppeln, daß die Konzentrationsunterschiede zwischen den Eintritts- und Austrittsströmen der - blockweise zusammengefaßten - Mittel- und Kathodenkammern im Bereich von 0,5 bis 15 Gew.-%, bevorzugt von 2 bis 5 Gew.-% liegen. Hierdurch kann man in der Regel die Stromausbeute steigern.

Weiterhin ist es hierbei von Vorteil, wenn man den Sulfatstrom der Mittelkammern eines Blocks als Eintrittsstrom des nächstfolgenden Blocks einsetzt, so daß der erste Block die höchste und der letzte Block die niedrigste Konzentration an Sulfat im Produktstrom der Mittelkammern aufweist. Der Produktstrom der Kathodenkammer mit den Laugen wird bei dieser Verfahrenskonzeption vorteilhaft im Gegensatz dazu im Kreis und gegenläufig geführt, d.h. der Produktstrom des letzten Blocks dient als Eintrittsstrom des vorletzten Blocks usw.; der Produktstrom des ersten Blocks dient als Eintrittsstrom der letzten Kammer. Den Schwefelsäurestrom der Anodenkammer kann man in gleicher Weise im Kreis führen. Auf diese Weise sind in der Regel die Konzentrationen der Eintrittsströme des ersten Blocks am niedrigsten, die des letzten Blocks am höchsten.

Die Zulaufkonzentrationen für die Alkalilaugen und Schwefelsäure zum Kathoden- bzw. Anodenraum können 0,2 bis 15 Gew.-%, vorzugsweise 2 bis 5 Gew.-% betragen. Als Ablaufkonzentrationen bei der einzelnen Zelle bzw. Kaskade können 20 bis 45 Gew.-%ige Alkalilaugen und 40 bis 75 Gew.-%ige Schwefelsäuren erreicht werden.

Bei der Spaltung von Ammoniumsulfat zu Schwefelsäure und Ammoniakwasser kann als Zulaufelektrolyt 1 bis 15 Gew.-%ige, vorzugsweise 3 bis 5 Gew.-%ige wäßrige Ammoniaklösung eingesetzt werden. Soll Ammoniak gasförmig gewonnen werden, wird im Kathodenraum eine 5 bis 30 Gew.-%ige, wäßrige Alkalilauge als Leitelektrolyt eingesetzt.

In der Mittelkammer können die Alkali- und Ammoniumsulfatkonzentrationen zwischen 0,5 Gew.-% und der Sättigungsgrenze liegen. Bevorzugt sind Alkali- und Ammoniumsulfatgehalte von 10 Gew.-% bis zur Sättigungsgrenze. Als Alkalisulfate kommen vorzugsweise die Sulfate des Natriums oder Kaliums in Betracht.

Zur Erhöhung der Gesamtausbeute der elektrochemischen Alkalisulfatspaltung nutzt man zweckmäßigerweise die durch den ohmschen Spannungsverlust in der Elektrodialysezelle anfallende thermische Energie zur Aufkonzentrierung der Säure und Lauge aus. Dies kann z.B. durch Absenkung der Wasserdampfpartialdrücke im Anolyt- und Katholytgasraum, oder durch nachgeschaltete Vakuumeindampfer, vorzugsweise eine mehrstufige Eindampfung erreicht werden. Die Absenkung der Wasserdampfpartialdrücke kann z.B. dadurch erfolgen, daß man einen Teil des an der Anode bzw. Kathode entstehenden Gases vom Wasserdampf befreit und im Kreislauf führt.

Das erfindungsgemäße Verfahren eignet sich insbesondere zur Aufarbeitung von wäßrigen Alkali- und Ammoniumsulfatlösungen mit einem Salzgehalt von $\geq 10$ Gew.-%. Die elektrochemische Spaltung in der dreigeteilten Elektrodialysezelle mit der durch Schwefeldioxid depolarisierten Anode führt bei hohen Stromausbeuten zu hohen Schwefelsäurekonzentrationen, da im Gegensatz zu den bisherigen Verfahrenstechniken im Anodenraum Wasser verbraucht wird. Bei einer gleichzeitigen Depolarisation der Kathode durch Sauerstoff oder Luft beträgt der Energiebedarf für die elektrochemische Spaltung der Sulfate gegenüber Elektrolysen und Elektrodialysen mit nicht depolarisierten nur etwa 50 %.

Beispiel 1

Eine dreigeteilte Elektrodialysezelle wird mit einer Anode und Kathode von je 1 dm$^2$ geometrischer Elektrodenoberfläche bestückt. Als Anode wird eine Konstruktion aus zwei dotierten Tantalstreckmetallen, zwischen denen sich dotierte Tantalwolle befindet, verwendet. Der Abstand zwischen den beiden Streckmetallen, der mit oberflächlich borierter Tantalwolle ausgefüllt ist, beträgt 5 mm. Die Tantalwolle besitzt eine Drahtstärke von 0,2 mm und hat eine Dichte von 1,3 kg/l. Dotiert ist die Tantalwolle sowie die beiden Tantalstreckmetalle mit einem Tantal-Iridiummischoxid und zusätzlich mit metallischem Platin.

Die Kathode hat die gleiche Form wie die Anode und besteht aus 2 Silbernetzen mit 0,5 mm Maschenweite, zwischen denen sich Silberwolle befindet. Die Silberwolle hat eine Drahtstärke von 0,2 mm und eine Dichte von 1,9 kg/l.

Der Anodenraum, in dem die Schwefelsäure erzeugt wird, ist durch eine Anionenaustauschermembran von der Mittelkammer, in der sich 20 Gew.-%ige Natriumsulfatlösung befindet, separiert. Als Anionenaustauschermembran wird ein Styrol-Divinylbenzol-Copolymerisat mit 6 Massen% Divinylbenzol und quervernetzten quaternären Ammoniumgruppen vom Typ R-CH$_2$-N(CH$_3$)$_3^+$ sowie einer vernetzten Polyethylenstützschicht in Meer-Insel-Struktur verwendet. Der Gesamtvernetzungsgrad in dieser Membran beträgt etwa 12 %. Diese Ionenaustauschermembran enthält zusätzlich niedermolekulare Aminogruppen vom Typ R-CH$_2$-N(CH$_3$)$_2$ als Hydroniumionenblocker. Auf der Ionenaustauscherseite zur Mittelkammer befindet sich eine weitere Anionenaustauschermembran, die Aminogruppen vom Typ RNH(CH$_2$CH$_2$NH)$_n^-$ enthält. Als Kationenaustauschermembran wird ein Polymer auf Basis perfluorierten Olefinen mit Sulfonsäuregruppen der Firma DuPont vom Typ 324 verwendet.

Der Abstand zwischen der Anionen- und Kationenaustauschermembran in der Mittelkammer beträgt 1,5 mm. Die Anode und Kathode liegt direkt auf der Kationenaustauschermembran bzw. Anionenaustauschermembran auf. Der Anoden- und Kathodenraum der Elektrodialysezelle wird wie die Mittelkammer zwangsdurchströmt.

Die Strömungsgeschwindigkeit in der Mittelkammer beträgt etwa 20 cm/s, während die Strömungsgeschwindigkeit in der Anoden- und Kathodenkammer ~ 38 cm/s betragen. Der Katholytkreislauf wird mit kohlendioxidfreiem Sauerstoff und der Anodenkreislauf mit Schwefeldioxid, das 3 Vol.-% Wasserstoff enthält, kontinuierlich begast. Der Gasanteil in den beiden Kreislaufelektrolyten beträgt etwa 2,5 bis 3 Vol.-%. Zu Beginn der Elektrodialyse, die im Batchbetrieb erfolgt, wird im Anolytkreislauf eine 2,5 Gew.-%ige Schwefelsäure, im Katholytkreislauf eine 2,5 Gew.-%ige Natronlauge und im Mittelkammerkreislauf eine 32 Gew.-%ige, wäßrige Natriumsulfatlösung mit 0,05 Gew.-% Ammoniak eingefüllt.

Die Betriebsbedingungen während der Elektrodialyse sind

Stromdichte:     $3 \text{ kA/m}^2$
Zellspannung:   2,0 bis 2,1 V
Temperatur:    85°C.

Vergleichsweise beträgt die Zellspannung mit nicht depolarisierten Elektroden unter gleichen Versuchsbedingungen etwa 4 bis 4,2 V.

Zusätzlich werden der schwefelsäurehaltige Anolyt und der natronlaugehaltige Katholyt getrennt einem Vakuumeindampfer zugeführt. Auf diese Weise wird die bei der Elektrodialyse anfallende überschüssige Wärmeenergie zur weiteren Aufkonzentrierung der Säure und Lauge ausgenutzt. Unter den beschriebenen Versuchsbedingungen kann in Abhängigkeit von den aufgeführten Endsäure- und Endlaugekonzentrationen die folgende Stromausbeute im Batchbetrieb erreicht werden:

| Stromausbeute % | NaOH-Konzentration % | $H_2SO_4$-Konzentration % |
|---|---|---|
| 80 | 25 bis 28 | 45 bis 50 |

Der Natriumgehalt in der Schwefelsäure beträgt ≤ 30 ppm und der Sulfatgehalt in der Natronlauge ≤ 10 ppm.

Der Energiebedarf beträgt etwa nur 50 % im Vergleich zu einer konventionellen Dreikammerzellen-Elektrodialyse mit Sauerstoffentwicklung.

Depolarisiert man die Anode nicht mit Schwefeldioxid und entwickelt Sauerstoff, so können unter gleichen Versuchsbedingungen folgende Ergebnisse erhalten werden:

| Stromausbeute % | NaOH-Konzentration % | $H_2SO_4$-Konzentration % |
|---|---|---|
| 80 | 25 bis 28 | 33 bis 36 |

Beispiel 2

Zur Elektrolyse wird eine Elektrolysezelle wie im Beispiel 1 verwendet. Abweichend von dem Aufbau in Beispiel 1 ist das Anoden- und Kathodenmaterial. Als Anodenmaterial wird ein Graphit mit einer offenen Porosität von 60 % verwendet. Zwischen dem porösen Graphit und der Anionenaustauschermembran befindet sich eine 2 mm dicke Schicht aus graphitierten Kohlenstoff-Fasern. Der Graphit und die Kohlenstoff-Fasern sind oberflächlich mit einem Gemisch aus metallischem Palladium und metallischem Platin im Verhältnis 1:1,5 beschichtet. Die Beschichtung erfolgte durch Reduktion mit Ameisensäure in salzsaurer, acetatgepufferter Platin-II- und Palladium-II-Salzlösung und anschließender thermischer Fixierung bei +800°C unter Stickstoffatmosphäre. Als Kathodenmaterial wird zwischen den Silbernetzen als aktives Material Silberschwamm mit einer Korngröße von 1 bis 2 mm verwendet. Der Silberschwamm wurde aus Silberoxid und Polyethylen, welches mit einem Druck von 20 $\text{kp/cm}^2$ zu Preßlingen von 4 cm Durchmesser und 5 mm Dicke verarbeitet wurde, durch thermische Umsetzung und anschließende mechanische Zerkleinerung erzeugt. Das Verhältnis Silberoxid zu dem Reduktionsmittel Polyethylen betrug 1:1,1 bezogen auf die theoretisch erforderliche Reduktionsmittelmenge, wobei das überschüssige Polyolefin durch eine thermische Nachbehandlung an Luft entfernt wurde. Beim Betrieb der Zelle wird der Anodenraum zwischen der Anionenaustauschermembran und der porösen Graphitplatte mit Schwefelsäure durchströmt, die einen Gasanteil 2,5 Vol.% bestehend aus Schwefeldioxid und Wasserstoff aufweist. Der Wasserstoffanteil im Schwefeldioxid beträgt 4 Vol.%. Die Kathode wird wie in Beispiel 1 mit Sauerstoff betrieben. Bei den gleichen Zulaufkonzentrationen an Natriumsulfat, Natronlauge und Schwefelsäure wie in Beispiel 1 kann die Elektrodialyse wie folgt betrieben werden:

Stromdichte:     $1 \text{ kA/m}^2$
Zellspannung:   1,2 V
Temperatur:    85°C

Verwendet man anstelle des Schwefeldioxid/Wasserstoffgemisches reines Schwefeldioxid, ergeben sich folgende Betriebsbedingungen:

Stromdichte:     $1 \text{ kA/m}^2$

Zellspannung:   1,45 V
Temperatur:     85°C

Unter den beschriebenen Versuchsbedingungen können 20 bis 25 Gew.-%ige Natronlaugen und 35 bis 40 Gew.-%ige Schwefelsäuren bei Stromausbeuten von 80 % erreicht werden.

Bei dieser Betriebsweise kann der Energiebedarf bis auf 1/3 im Vergleich zur herkömmlichen Elektrodialyse mit Sauerstoff- und Wasserstoffentwicklung vermindert werden.

**Patentansprüche**

1. Verfahren zur elektrochemischen Spaltung von Alkalisulfaten und Ammoniumsulfat in Schwefelsäure und Alkalilaugen bzw. Ammoniak in einer dreigeteilten Elektrodialysezelle, deren Anodenraum durch eine Anionenaustauschermembran und deren Kathodenraum durch eine Kationenaustauschermembran von der Mittelkammer separiert ist, dadurch gekennzeichnet, daß man die Anode mit Schwefeldioxid depolarisiert.

2. Verfahren nach Anspruch 1, dadurch gekennzeichnet, daß man dem Schwefeldioxid bis zu 10 Vol.% Wasserstoff und/oder Kohlenmonoxid und/oder Schwefelwasserstoff zusetzt.

3. Verfahren nach Anspruch 1 und 2, dadurch gekennzeichnet, daß man als Anodenmaterialien dotierte Graphite oder Metalle oder Metall-Legierungen verwendet, die eine elektrolytbeständige, elektronenleitende Deckschicht aufweisen.

4. Verfahren nach Anspruch 1 bis 3, dadurch gekennzeichnet, daß die elektrolytbeständige, elektronenleitende Deckschicht der Anode aus nichtstöchiometrischen Mischoxiden der Ventilmetalle der IV. bis VI. Nebengruppe und Metallen oder Metalloxiden der Platinmetallgruppe und/oder Platinaten besteht.

5. Verfahren nach Anspruch 1 und 2, dadurch gekennzeichnet, daß man als Anodenmaterialien Legierungen verwendet, die aus Kupfer und/oder Silber und Metallen der IV. bis VI. Nebengruppe bestehen, wobei diese Legierungen bis zu 5 Gew.-% Palladium und/oder Eisen und/oder Nickel und/oder Kobalt enthalten können.

6. Verfahren nach Anspruch 1 bis 5, dadurch gekennzeichnet, daß die Kathode mit Sauerstoff depolarisiert wird.

7. Verfahren nach Anspruch 1 bis 6, dadurch gekennzeichnet, daß als Kathodenmaterialien mit Platinmetallen, Platinmetallmischoxiden und/oder Silber und/oder Gold dotierter Graphit oder Silberwolle oder Silberschwamm verwendet werden.

8. Verfahren nach Anspruch 1 bis 7, dadurch gekennzeichnet, daß man Elektrodenmaterialien mit einer großen Oberfläche in Form von porösen Formkörpern, Schwamm, Wolle und Granulaten verwendet.

9. Verfahren nach Anspruch 1 bis 8, dadurch gekennzeichnet, daß man die Elektrodialyse bei Temperaturen von $\geq$ +70 bis $\leq$ +110°C und Stromdichten von 0,5 bis 15 kA/m$^2$ mit einer Anionenaustauschermembran durchführt, deren polymere Ionenaustauschermatrix aus einem Styrol-Divinylbenzol-Copolymerisat mit stark basischen quervernetzten quartären Ammoniumgruppen vom Typ $R\text{-}CH_2N(R_3)_3+$ und einem Hydroniumionenblocker besteht.

10. Verfahren nach Anspruch 1 bis 9, dadurch gekennzeichnet, daß als stark basische, ladungstragende Gruppen $R\text{-}CH_2N(R_3)_3+$ bevorzugt $R\text{-}CH_2\text{-}N(CH_3)_3+$-Gruppen in der Anionenaustauschermembran verwendet werden.

11. Verfahren nach Anspruch 1 bis 10. dadurch gekennzeichnet, daß die Anionenaustauschermembran auf der Seite zur Mittelkammer eine weitere Anionenaustauscherschicht oder Membran aufweist, die tertiäre oder sekundäre Aminogruppen enthält.

12. Verfahren nach Anspruch 1 bis 11, dadurch gekennzeichnet, daß der Abstand zwischen der Kationen- und Anionenaustauschermembran in der Mittelkammer $\leq$ 3 mm beträgt.

13. Verfahren nach Anspruch 1 bis 12, dadurch gekennzeichnet, daß in der Mittelkammer bevorzugt 10 gew.-%ige bis gesättigte Alkali- oder Ammoniumsulfatlösungen eingesetzt werden.

14. Verfahren nach Anspruch 1 bis 13, dadurch gekennzeichnet, daß die Zulaufkonzentrationen für die Alkalilauge und Schwefelsäure 0,2 bis 5 Gew.-%, die Ablaufkonzentrationen für die Alkalilaugen 25 bis 40 Gew.-% und die Ablaufkonzentrationen für die Schwefelsäure 30 bis 70 Gew.-% betragen.

15. Verfahren nach Anspruch 1 bis 14, dadurch gekennzeichnet, daß der Alkalisulfatlösung 0,001 bis 2 Gew.-% Ammoniak oder primäre, sekundäre oder tertiäre Amine mit Alkylresten mit 1 bis 4 Kohlenstoffatomen am Stickstoffatom, die auch eine Hydroxyl- oder Alkoxygruppe als Substituenten haben können, zugesetzt werden.

16. Verfahren nach Anspruch 1 bis 15, dadurch gekennzeichnet, daß die durch den ohmschen Spannungsverlust in der Elektrodialysezelle anfallende thermische Energie zur Aufkonzentrierung der Schwefelsäure und Alkalilaugen ausgenutzt wird.

17. Verfahren nach Anspruch 1 bis 16, dadurch gekennzeichnet, daß bei der elektrochemischen Spaltung von Ammoniumsulfat Alkalilaugen als Leitelektrolyt im Kathodenraum verwendet werden.

## Claims

1. A process for the electrochemical decomposition of alkali metal sulphates and ammonium sulphate into sulphuric acid and alkali metal hydroxide solutions or ammonia in a three-compartment electrodialysis cell whose anode space is separated from the central chamber by an anion excahnge membrane, and whose cathode space is separated from the central chamber by a cation exchange membrane wherein the anode is depolarized with sulphur dioxide.

2. A process as claimed in claim 1, wherein up to 10% by volume of hydrogen and/or carbon monoxide and/or hydrogen sulphide are added to the sulphur dioxide.

3. A process as claimed in claims 1 and 2 wherein doped graphites or metal alloys which have an electrolyte-resistant, electron-conducting covering layer are used as anode materials.

4. A process as claimed in claims 1 to 3 wherein the electrolyte-resistant, electron-conducting covering layer of the anode is composed of non-stoichiometric mixed oxides of metals of groups IV to VI and metals or metal oxides of the platinum group and/or platinates.

5. A process as claimed in claims 1 and 2, wherin alloys which are composed of copper and/or silver and metals on groups IV to VI and can contain up to 5% by weight of palladium and/or iron and/or nickel and/or cobalt are used as anode materials.

6. A process as claimed in claims 1 to 5, wherein the cathode is depolarized with oxygen.

7. A process as claimed in claims 1 to 6, wherein graphite or silver wool or silver sponge doped with platinum metals, platinum metal oxides and/or silver and/or gold are used as cathode materials.

8. A process as claimed in claims 1 to 7, wherein electrode materials with a large surface area in the form of porous shaped articles, sponge, wool and granules are used.

9. A process as claimed in claims 1 to 8, wherein the electrodialysis is carried out at from + 70 to + 110 °C and with current densities of from 0.5 to 15 kA/m$^2$ with an anion exchange membrane whose polymeric ion exchange matrix is composed of a styrene/divinyl-benzene copolymer with strongly basic crosslinked quaternary ammonium groups of the R-CH$_2$N (R$_3$)$_3$+ type and a hydronium ion blocker.

10. A process as claimed in claims 1 to 9, wherein R-CH$_2$-N (R$_3$)$_3$+ preferably R-CH$_2$-N(CH$_3$)$_3$+ groups are used as strongly basic charge-carrying groups in the anion exchange membrane.

11. A process as claimed in claims 1 to 10, wherein the anion exchange membrane has on the side facing the central chamber another anion exchange layer or membrane which contains tertiary or secondary amino groups.

12. A process as claimed in claims 1 to 11, wherein the distance between the cation and anion exchange membranes in the central chamber is ≤ 3mm.

**13.** A process as claimed in claims 1 to 12 wherein alkali metal or ammonium sulphate solutions which are preferably 10% by weight to saturated are employed in the central chamber.

**14.** A process as claimed in claims 1 to 13, wherein the feed concentrations of the alkali metal hydroxide solution and sulphuric acid are from 0.2 to 5% by weight, the discharge concentrations of the alkali metal hydroxide solutions are from 25 to 40 % by weight, and the discharge concentrations of the sulphuric acid are from 30 to 70% by weight.

**15.** A process as claimed in claims 1 to 14 wherein from 0.001 to 2% by weight of ammonia or primary, secondary or tertiary amines which have alkyl radicals with 1 to 4 carbon atoms on the nitrogen and which can also have a hydroxyl or alkoxy group as a substituent are added to the alkali metal sulphate solution.

**16.** A process as claimed in claims 1 to 15, wherein the thermal energy produced by the ohmic loss in the electrodialysis cell is used to concentrate the sulphuric acid and alkali metal hydroxide solutions.

**17.** A process as claimed in claims 1 to 16, wherein alkali metal hydroxide solutions are used as conducting electrolytes in the cathode space in the electrochemical decomposition of ammonium sulphate.

## Revendications

**1.** Procédé de décomposition chimique de sulfates métalliques alcalins et de sulfates d'ammonium dans de l'acide sulfurique ou des lessives alcalines ou encore dans de l'ammoniaque dans une cellule tripartite d'électrodialyse, dont le compartiment d'anodes est séparée par une membrane de la chambre centrale d'échange anionique, le compartiment des cathodes étant séparé de cette chambre par une membrane d'échange cationique, caractérisé par le fait que l'anode est dépolarisée au dioxyde de soufre.

**2.** Procédé selon la revendication 1, caractérisé par le fait qu'il est ajouté au dioxyde de soufre jusqu'à 10% en volume d'hydrogène et/ou de monoxyde de carbone et/ou d'acide sulfhydrique.

**3.** Procédé selon les revendications 1 et 2, caractérisé par le fait qu'il est utilisé comme matériau d'anode des graphites ou des métaux dopés ou encore des alliages métalliques dopés, qui presentent une couche de couverture résistante a l'électrolyte et conductrice d'électrons.

**4.** Procédé selon les revendications 1 à 3, dans lequel la couche de couverture résistante à l'électrolyte et conductrice d'électrons de l'anode est composée d'oxydes métalliques mélangés non stoechiométriques des métaux à soupape des groupes annexes IV à VI et de métaux ou d'oxydes métalliques du groupe du platine et/ou de platinais.

**5.** Procédé selon les revendications 1 et 2, caractérisé par le fait que les matériaux des anodes sont des alliages qui sont composés de cuivre et/ou d'argent et de métaux du groupes annexes IV à VI, ces alliages pouvant contenir jusqu'à 5% en poids de palladium et/ou de fer et/ou de nickel et/ou de cobalt.

**6.** Procédé selon les revendications 1 à 5, caractérisé par le fait que la cathode est dépolarisée avec de l'oxygène.

**7.** Procédé selon les revendications 1 à 6, caractérisé par le fait qu'il est utilisé comme matériau de cathode du graphite ou de la laine d'argent ou de l'éponge d'argent, dopés de platines, d'oxydes métalliques mélangés de platine et/ou d'argent.

**8.** Procédé selon les revendications 1 à 7, caractérisé par le fait qu'il est utilisé comme matériau d'électrode ayant une grande surface un matériau sous forme de profilés poreux, d'éponge, de laine et de granulés.

**9.** Procédé selon les revendications 1 à 8, caractérisé par le fait que l'électrodialyse est effectué à des températures comprises entre $\geq$ + 70°C et + 110°C et des densités de courant entre 0,5 et 15 kA/Vm$^2$ avec une membrane d'échange anionique, dont la matrice d'échange d'ions polymère est composée d'un copolymérisat styrène-divnyle-benzène avec des groupes quaternaires ammonium fortement basiques réticulés de type $R\text{-}CH_2N(R_3)_3+$ et un agent bioquant d'ions d'hydronium.

**10.** Procédé selon les revendications 1 à 9, caractérisé par le fait qu'il est utilisé préférentiellement comme groupes fortement basiques $R\text{-}CH_2N(R_3)_3+$ porteurs de charges des groupes $R\text{-}CH_2N(CH_3)_3+$ dans la membrane d'échange anioniques.

**11.** Procédé selon les revendications 1 à 10, caractérisé par le fait que la membrane d'échange anionique présente sur le côté tourné vers la chambre centrale une autre couche d'échange anionique ou membrane, qui comporte des groupes amines tertiaires ou secondaires.

**12.** Procédé selon les revendications 1 à 11, caractérisé par le fait que la distance entre la membrane d'échangeur cationique et la memberane d'échangeur anionique est ≤ 3mm dans la chambre centrale.

**13.** Procédé selon les revendications 1 à 12, caractérisé par le fait qu'il est utilisé de façon privilégiée dans la chambre centrale des solutions alcalines ou de sulfate d'ammonium allant d'une dilution à 10% en poids jusqu'à saturation.

**14.** Procédé selon les revendications 1 à 13, caractérisé par le fait que les concentrations d'alimentation de la lessive alkaline et d'acide sulfurique vont de 0,2 à 5% en poids et que les concentrations de sortie des lessives alcalines vont de 25 à 40% en poids, avec des concentrations de sortie d'acide sulfurique vont de 30 à 70% en poids.

**15.** Procédé selon les revendications 1 à 14, caractérisé par le fait que la solution de sulfate alcalin est additionnée de 0,001 à 2% en poids d'ammoniac ou d'amines primaires, secondaires ou tertiaires avec des résidus d'alkyle de 1 à 4 atomes de carbone sur l'atome d'azote, qui peuvent également avoir comme substituants un groupe hydroxyle ou alcoxyle.

**16.** Procédé selon les revendications 1 à 15, caractérisé par le fait que l'énergie thermique générée par la perte ohmique dans la cellule d'électrodialyse est utilisée pour concentrer l'acide sulfurique et les lessives alcalines.

**17.** Procédé sur les revendications 1 à 16, caractérisé par le fait qu'il est utilisé dans la décomposition électrochimique des solutions alcalines de sulfate d'ammonium comme électrolyte conducteur dans le compartiment de cathodes.